# EUROPEAN PATENT APPLICATION

(11) **EP 4 381 996 A1**
(43) Date of publication of application: **12.06.2024**
(21) Application number: 23208788.2
(22) Date of filing: 09.11.2023
(51) Int. Cl.: A45F 3/20

(54) **COLLAPSIBLE VESSEL**

(30) Priority: 07.12.2022 GB 202218429
(71) Applicant: Houghton, Edward, London N16 5UD (GB)
(72) Inventor: Houghton, Edward, London N16 5UD (GB)
(74) Representative: Fry, David John

(57) **Abstract**

A collapsible vessel for inter alia carrying liquid when constructed, the vessel comprising four flexible sheet members connectable to form the vessel. First and side sheet members of the vessel have the general shape of a curved trapezoid and have an aperture formed at or near three corners and a rivet formed at or near a fourth corner. A third sheet member has a rivet formed at or near each end. A fourth sheet member has a notch formed in opposing end edges.

## Description

### Field of the Invention

The present invention relates to a collapsible vessel. More especially, the invention relates to a collapsible bowl-shaped vessel for holding liquid.

### Background of the Invention

Many people enjoy going on camping or hiking expeditions in which they carry everything they need for the expedition in a rucksack on their back. One essential item for a trip lasting more than one day is at least one vessel of some sort which can hold their food or drink at meal times and/or in which they can cook their food or boil their water.

Solid non-collapsible vessels used for such purposes are generally undesirable due to their weight and the space they take up in the bag, much of which is dead space due their hollow structure.

Collapsible vessels, such as drinking cups, are available which have walls that collapse in on each other in a telescopic manner, however the designs are fairly basic and the extended vessels are prone to leakage at the joins. They are also not generally suitable for application as a pot in which food can be cooked or liquid boiled over a fire.

Limitations on carrying space and weight can be severe, particularly in the military and mountaineering expeditions, and so there is a need for a vessel that is portable, light-weight, collapsible and water-sealed when in use.

The design of the present invention has application in any industry in which space and weight are at a premium. These include, without limitation, application in the military, medical, mountaineering, extreme outdoor sports such as ultra-marathon running and disaster relief/conflict zones as well as use in the general outdoor activity (for example, camping and climbing) market.

EP0927527A1 describes a folding cup is of the type comprising two leaves of thin, resilientlydeformable, sheet material.

Moreover, the applicant is the inventor of a collapsible vessel disclosed in GB2573626. This vessel comprises three flexible sheet members, which have a connection point at one end to pivotally connect all three sheets together at that point and each member having an attachment point at the end distal to the connection point to attach the sheets together at the attachment point once the sheets have been flexed to form a bowl-shaped vessel.

The present invention seeks to provide an improvement to the vessel contained in the applicant's earlier patent. In particular, the improvement provides a stronger structure and more secure seal when assembled.

### Statements of invention

According to a first aspect, there is provided a collapsible vessel for inter alia carrying liquid when constructed, the vessel comprising four flexible sheet members connectable to form the vessel, wherein: first and second side sheet members have the general shape of a curved trapezoid and have an aperture formed at or near three corners and a rivet formed at or near a fourth corner; a third sheet member having a rivet formed at or near each end; and a fourth sheet member having a notch formed in opposing end edges.

Preferably, the vessel further comprises a fifth elongate flexible sheet member having apertures formed at or near each end.

Preferably, each aperture is a punched keyhole aperture.

Preferably, the sheets are made from stainless steel.

According to a second aspect, there is provided a method of constructing the vessel of the first aspect, comprising the steps of: connecting the first and second sheets together by engaging a rivet of the first sheet within an opposing aperture of the second sheet and then flexing the sheets so to connect the rivet of the second sheet within an opposing aperture of the first sheet thereby to form a bowl shape; connecting the third sheet to the first and second sheets by engaging one rivet of the third sheet within a first set of adjacent aperture of first and second sheets, and then flexing the sheet so to connect the other rivet of the third sheet with the second pair of adjacent apertures of the first and second sheets thereby to complete the vessel structure; and inserting the fourth sheet into the base of the vessel underneath the third sheet such that the sheet abuts and extends between the rivets of the first and second sheets respectively.

Preferably, the method further comprises the step of depressing the centre of the fourth strip to curve the strip upwardly towards the base of the vessel.

Preferably still, the method further comprises the step of securing a first end of the fifth sheet to the vessel by engaging its aperture with the rivet of the third sheet and then flexing the fifth sheet to secure the other end of the fifth sheet to the vessel by engaging its aperture with a rivet of the second sheet.

### Brief Description of the Drawings

The invention will now be described, by way of example only, with reference to the accompanying drawings, in which:
Figure 1 is an exploded view of a vessel according to a first embodiment of the invention;
Figure 2 is an exploded view illustrating the formation of the vessel;
Figure 3 is a perspective view of the assembled vessel;

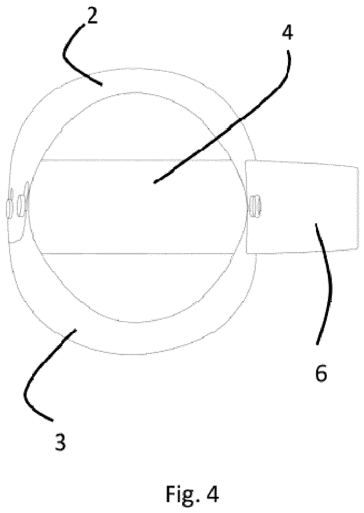

Figure 4 is a base view of the assembled vessel; and

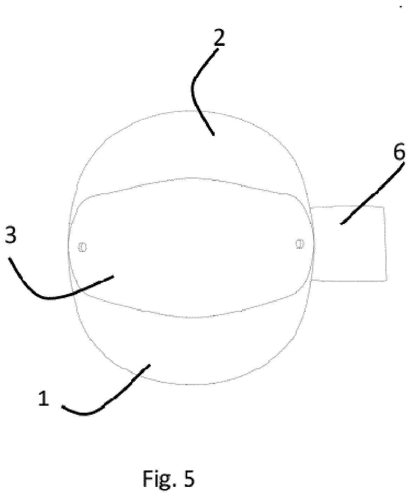

Figure 5 is a top view of the assembled vessel.

### Detailed Description of Preferred Embodiment

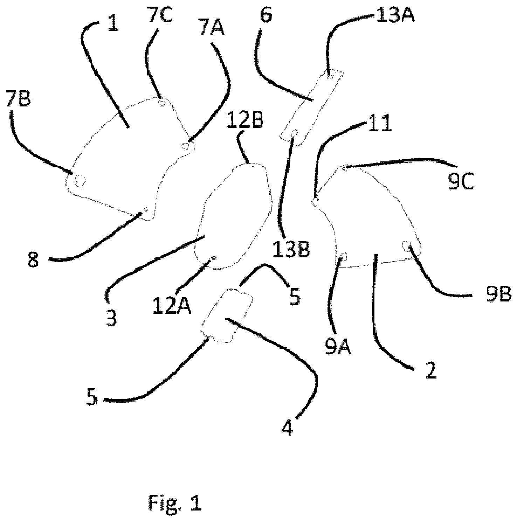

The five separated components of a collapsible vessel constructed in accordance with the invention is shown in figure 1.

The main components of the vessel are the same or similar to those of the vessel disclosed in GB2573626, and to that extent the detail of the patent is incorporated herein by reference.

The main parts comprise a first side leaf 1, a second side leaf 2 and centre leaf 3. All the leaves 1, 2, 3 are made from a metal sheets, preferably stainless steel with around 0.2 mm thickness. The thickness of the steel sheets allows each of the sheets 1, 2, 3 to flex or bend to form a vessel in the shape of a bowl, as will be described later. The overall weight of the entire set of components is around 64g.

The side leaves 1, 2 are generally formed with the same dimensions and shape profile which is generally of an annular section or curved trapezoid. As can be seen in figure 1, the leaves 1, 2 have generally parallel curved side edges leading to straight end edges. The corners are rounded.

The overall length (X) of each side leaf 1, 2 is around 185 mm.

The centre leaf 3 has the general shape profile of a superellipse with a curvature like a rhombus but with convex sides. The overall length of the leaf 3 is around 150 mm.

It is appreciated that the dimensions and precise shape detail of each leaf can be varied although the chosen the parameters require interaction and alignment to ensure that a vessel is constructed with a structure and seal sufficient to provide a secure housing once constructed and to avoid any leakage when the housing is used to hold liquid for consumption or otherwise.

To provide more strength and an improved seal to the vessel once assembled, a fourth supporting leaf 4 is provided. The leaf 4 is generally rectangular in shape and has central notches 5 in each end edge.

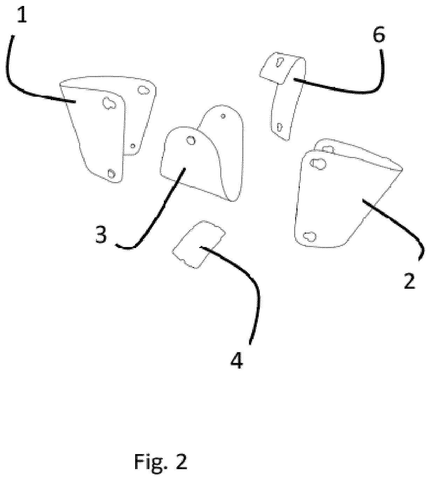

A fifth leaf member 6 is also provided which, when assembled with the other leaves, provides a handle structure, as can be seen in figure 2. The leaf 6 is generally formed as an elongate rectangle. Notches are provided generally centrally on each end edge.

The first side leaf 1 has a punched keyhole aperture 7 in or near three of its corners. A rivet fastener 8 is provided in or near the fourth corner. The rivet 8 is designed to engage with a punched keyhole aperture 9A formed in or near a corner of the second leaf 2 during assembly of the vessel.

Similarly, the second side leaf 2 also has punched keyhole apertures 9 in or near three corners and a rivet or fastener 11 in or near the fourth corner. The rivet 11 is designed to engage with the punched keyhole aperture 7A of the first leaf 1.

The centre leaf 3 has a rivet or fastener 12 at or near each end. Rivet 12A engages with apertures 7B, 9B of the first and second leaves 1, 2 respectively during assembly of the vessel. Rivet 12B engages with apertures 7C and 9C of the first and second leaves 1, 2 respectively during assembly of the vessel.

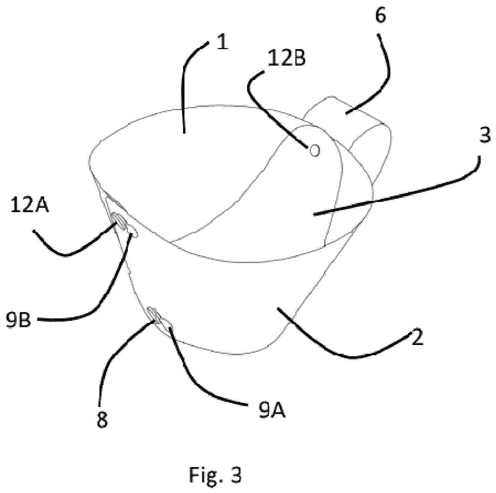

During assembly, the supporting leaf 4 is inserted into and across the bases of the vessel, underneath the centre leaf, as can be seen best in figure 3.

When inserted, each notch 5 formed in the end of the support leaf 4 abuts the respective rivets 8, 11 securing the side leaves 1, 2 together.

The length of the support leaf 4 is slightly longer than the diameter of the base of the vessel when assembled such that the support leaf 4 bends upwardly when secured between the rivets 8, 11. During assembly, the user is able to depress the centre of the support leaf 10 to snap lock it in place with an upward curve.

The support leaf 4 (and other leaves) are made from spring-hard stainless steel and so has a bias to straighten. Consequently, the ends of the support leaf 4 apply an outward pressure on the side leaves 1, 2 which is resisted by the connection at the rivets 8,11. This creates an inward squeezing force along the seal line thereby creating a strong effective seal.

Other materials with the same spring bias may be used.

An audible click can be heard when the support leaf 4 locks the leaves together to inform the user that the seal is formed, and the vessel is ready for use.

The fifth leaf 6 is formed with a punched keyhole aperture 13 at or near each end. Aperture 13A is engages with aperture 7C of the first side leaf 1, aperture 9C of the second side leaf 2 and rivet 12B of the centre leaf 3.

The leaf 6 then flexes to allow aperture 13B to engage with aperture 7A of the first side leaf 1 and rivet 11 of the second side leaf 2.

The flexed shape of the fifth leaf 6 forms a convenient handle.

The vessel may have useful application as a component in a lightweight tool kit for a motorcycle for example due to the fact that it requires little space for storage in its deconstructed state and it can be easily and quickly constructed on site to form a steel bowlshape vessel for use with oil changes or similar tasks.

The connection and attachment means are simple and effective and do not require any fiddly or cumbersome process, which would be particularly undesirable in the environment in which the vessel is likely to be used.

When the leaves are disengaged the folded flat the vessel has an extremely low profile. The memory of the sheet material allows for the leaves to return to their flattened shape once disconnected. The typical depth of the deconstructed vessel is only 0.6 mm at points where the sheets are overlaid, with a slightly larger depth at the hook pivots. The dimensions and weight of the deconstructed components allow them to be slid down the side of other items and stored in a rucksack with ease using up very little space.

In an alternative embodiment the leaves are made of plastic material such as PP or PET and form a bucket-like structure when constructed together.

## Claims

1. A collapsible vessel for carrying liquid when constructed, the vessel comprising four flexible sheet members connectable to form the vessel, wherein:
first and second side sheet members (1, 2) have the general shape of a curved trapezoid and have an aperture (7, 9) formed at or near three corners and a rivet (8, 11) formed at or near a fourth corner;
a third sheet member (3) having a rivet (12) formed at or near each end;
**characterised in that** the vessel further comprises a fourth sheet member (4) having a notch (5) formed in opposing end edges.

2. A vessel according to claim 1, further comprising a fifth elongate flexible sheet member (6) having apertures (13) formed at or near each end.

3. A vessel according to claim 1 or claim 2, wherein each aperture is a punched keyhole aperture.

4. A vessel according to any one of claims 1 to 3, wherein the sheets are made from stainless steel.

5. A method of constructing the vessel of claim 1, comprising the steps of:
connecting the first and second sheets together by engaging a rivet of the first sheet within an opposing aperture of the second sheet and then flexing the sheets so to connect the rivet of the second sheet within an opposing aperture of the first sheet thereby to form a bowl shape;
connecting the third sheet to the first and second sheets by engaging one rivet of the third sheet within a first set of adjacent aperture of first and second sheets, and then flexing the sheet so to connect the other rivet of the third sheet with the second pair of adjacent apertures of the first and second sheets thereby to complete the vessel structure; and
inserting the fourth sheet into the base of the vessel underneath the third sheet such that the sheet abuts and extends between the rivets of the first and second sheets respectively.

6. A method according to claim 5, further comprising the step of depressing the centre of the fourth strip to curve the strip upwardly towards the base of the vessel.

7. A method according to claim 5 or claim 6, further comprising the step of securing a first end of the fifth sheet to the vessel by engaging its aperture with the rivet of the third sheet and then flexing the fifth sheet to secure the other end of the fifth sheet to the vessel by engaging its aperture with a rivet of the second sheet.
